# FASCICULE DE BREVET EUROPEEN

(11) **EP 4 501 708 B1**
(45) Date de publication et mention de la délivrance du brevet: **27.05.2026**
(21) Numéro de dépôt: 24186012.1
(22) Date de dépôt: 02.07.2024
(51) Int. Cl.: B60R 1/12

(54) **SYSTÈME ET PROCÉDÉ DE SURVEILLANCE D'OCCUPANT D'UN VÉHICULE**
SYSTEM UND VERFAHREN ZUR ÜBERWACHUNG EINES FAHRZEUGINSASSEN
VEHICLE OCCUPANT MONITORING SYSTEM AND METHOD

(30) Priorité: 01.08.2023 FR 2308316
(43) Date de publication de la demande: 05.02.2025
(73) Titulaire: Stellantis Auto SAS, 78300 Poissy (FR); FCA US LLC, Auburn Hills, MI 48326-2766 (US)
(72) Inventeur: BARRE, LAURENT, 75011 Paris (FR)
(74) Mandataire: ESIP

(56) Documents cités:
- DE-A1- 102018 222 127
- US-A1- 2008 195 261
- US-A1- 2015 085 116
- US-A1- 2016 368 422

## Description

### Domaine technique

La présente invention concerne un rétroviseur intérieur comprenant un système de surveillance d'occupant d'un véhicule et un procédé mis en œuvre par un tel système. L'invention concerne également un dispositif et un procédé d'acquisition d'images et de profondeurs. La présente invention concerne également un rétroviseur intérieur de véhicule.

### Arrière-plan technologique

Les systèmes de surveillance de conducteur et les systèmes de surveillance d'occupant sont aujourd'hui largement implémentés dans les véhicules, notamment à des fins sécuritaires comme en vérifiant la bonne utilisation de ceintures de sécurité par les occupants d'un véhicule ou en détectant un état de somnolence d'un conducteur.

Les systèmes de surveillance permettent également d'améliorer le confort d'un conducteur, par exemple en adaptant automatiquement une position d'un siège conducteur en fonction de la taille du conducteur, une position d'un rétroviseur intérieur ou extérieur en fonction de la position des yeux du conducteur ou encore d'envoyer des informations représentatives de la présence d'occupants dans le véhicule à un système de conditionnement d'air du véhicule.

Un tel système de surveillance doit être positionné en dehors du champ de vision du conducteur du véhicule afin de ne pas entraver sa vision de l'environnement dans lequel circule le véhicule, tout en permettant d'acquérir des données relatives à la fois au visage du conducteur et aux corps de l'ensemble des occupants du véhicule.

Un tel système comprenant une caméra permet d'obtenir des images de bonne résolution, mais présente cependant des limites en termes de détermination de profondeurs. En effet, un système de vision monoscopique permet d'estimer en outre des profondeurs relatives mais ne permet pas de déterminer une profondeur ou distance absolue d'un objet.

Un tel système comprenant un capteur de profondeur permet quant à lui d'obtenir une valeur de profondeur ou distance d'un objet très précise mais sa résolution est limitée. Le document US 2015/085116 A1 divulgue un exemple de rétroviseur.

### Résumé de la présente invention

Un objet de la présente invention est de résoudre au moins l'un des problèmes de l'arrière-plan technologique décrit précédemment.

Un autre objet de la présente invention est d'améliorer la qualité des données acquises par un système de surveillance d'occupant pour véhicule.

Un autre objet de l'invention est d'améliorer l'intégration d'un système de surveillance d'occupant pour véhicule dans un environnement de taille restreinte.

Selon un premier aspect, la présente invention concerne rétroviseur intérieur comprenant un système de surveillance d'occupant d'un véhicule, le système comprenant un ensemble de modules électroniques, l'ensemble comprenant :
- un capteur de profondeur,
- une caméra configurée pour capter des ondes visibles et infrarouges, et
- un émetteur d'ondes infrarouges,
caractérisé en ce que le système comprend un unique circuit imprimé configuré pour recevoir et connecter l'ensemble de modules électroniques, le système étant positionné dans un rétroviseur intérieur du véhicule.

Un tel rétroviseur présente l'avantage d'être compact grâce à la mutualisation d'un unique circuit imprimé. Sa position dans un rétroviseur intérieur permet de ne pas entraver la vision du conducteur tout en bénéficiant d'un point de vue permettant de voir l'ensemble des occupants du véhicule.

Selon une variante du rétroviseur, le capteur de profondeur est du type capteur de temps de vol (ToF).

Un tel capteur nécessite un faible encombrement et évalue des profondeurs ou distances avec une grande précision.

Selon une autre variante du rétroviseur, l'émetteur est contrôlé par le capteur de profondeur et par la caméra.

L'émetteur infra-rouge est ainsi mutualisé ce qui permet une réduction de l'encombrement du système et une diminution du coût financier d'un tel système.

Selon encore une variante, le rétroviseur comprend une puce configurée pour une transmission de données à destination d'un système embarqué du véhicule, la puce étant reliée en communication à l'ensemble de modules électroniques pour recevoir les données de l'ensemble de modules électroniques.

Ces données sont alors exploitées par divers systèmes embarqués du véhicule, par exemple un système en charge de la ventilation d'un habitacle du véhicule. La puce est également mutualisée pour la caméra et le capteur de profondeur.

Selon une variante supplémentaire du rétroviseur, l'émetteur comprend en outre un ensemble de diodes électro luminescentes configurées pour émettre un rayonnement infrarouge.

Des diodes électro luminescentes sont des émetteurs d'ondes infrarouges efficaces et compacts, facilement disposées sur le circuit imprimé.

Selon encore une variante, le rétroviseur comprend en outre un module de gestion de puissance configuré pour alimenter l'ensemble de modules électroniques.

Ce module de puissance est ainsi mutualisé pour l'ensemble des modules électroniques du système et permet d'alimenter les modules électroniques avec la puissance adéquate. Le nombre de connexions de la carte électronique est ainsi limité.

Selon encore une autre variante, le rétroviseur comprend un microcontrôleur configuré pour contrôler l'ensemble de modules électroniques.

Les modules électroniques sont ainsi synchronisés et communiquent entre eux via ce contrôleur.

Selon une variante supplémentaire du rétroviseur, l'ensemble des modules électroniques est orienté vers l'intérieur d'un habitacle du véhicule.

Selon un deuxième aspect, la présente invention concerne un procédé de surveillance d'occupant d'un véhicule mis en œuvre par un rétroviseur tel que décrit ci-dessus selon le premier aspect de la présente invention, le procédé comprenant les étapes de :
- émission d'ondes infrarouges par l'émetteur,
- réception de premières données représentatives d'une image acquise par la caméra,
- réception de deuxièmes données représentatives d'une cartographie de profondeurs acquise par le capteur de profondeur,
- association de valeurs de profondeurs de la cartographie à un ensemble de pixels de l'image.

Selon un troisième aspect, la présente invention concerne un véhicule, par exemple de type automobile, comprenant un rétroviseur tel que décrit ci-dessus selon le premier aspect de la présente invention.

### Brève description des figures

D'autres caractéristiques et avantages de la présente invention ressortiront de la description des exemples de réalisation particuliers et non limitatifs de la présente invention ci-après, en référence aux figures 1 à 3 annexées, sur lesquelles :
[Fig. 1] illustre schématiquement un habitacle d'un véhicule, selon un exemple de réalisation particulier et non limitatif de la présente invention ;
[Fig. 2] illustre schématiquement un rétroviseur intérieur embarqué dans le véhicule de la figure 1 et comprenant un système de surveillance d'occupant du véhicule, selon un exemple de réalisation particulier et non limitatif de la présente invention ;
[Fig. 3] illustre schématiquement un organigramme des différentes étapes d'un procédé de surveillance d'occupant du véhicule de la figure 1, selon un exemple de réalisation particulier et non limitatif de la présente invention.

### Description des exemples de réalisation

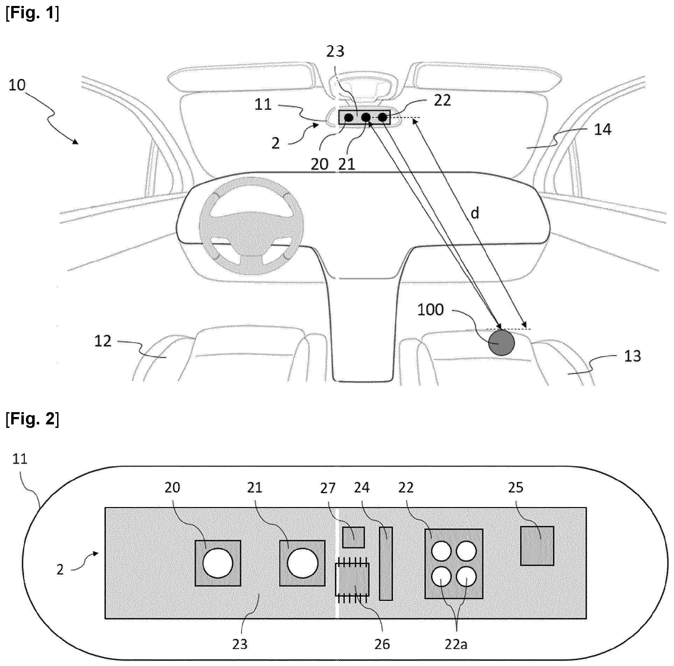

Un système et un procédé de surveillance d'occupant d'un véhicule vont maintenant être décrits dans ce qui va suivre en référence conjointement aux figures 1 à 3. Des mêmes éléments sont identifiés avec des mêmes signes de référence tout au long de la description qui va suivre.

Les termes « premier(s) », « deuxième(s) » (ou « première(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

Selon un exemple particulier et non limitatif de réalisation de la présente invention, le système de surveillance d'occupant d'un véhicule comprend un ensemble de modules électroniques, l'ensemble comprenant :
- un capteur de profondeur,
- une caméra configurée pour capter des ondes visibles et infrarouges et
- un émetteur d'ondes infrarouges,
caractérisé en ce que le système comprend un unique circuit imprimé configuré pour recevoir et connecter l'ensemble de modules, le système étant positionné dans un rétroviseur intérieur du véhicule.

La figure 1 illustre un habitacle d'un véhicule 10, par exemple un véhicule automobile. Selon d'autres exemples, le véhicule 10 correspond à un car, un bus, un camion ou un véhicule utilitaire, c'est-à-dire à un véhicule de type véhicule terrestre motorisé.

L'habitacle du véhicule 10 comprend par exemple, à un premier rang, un siège conducteur 12 et un siège passager 13. Le siège conducteur 12 se situe par exemple du côté gauche du véhicule, le siège passager 13 se situant du côté droit.

Les notions de droite et de gauche sont définies selon le sens de circulation du véhicule 10. L'exemple de la figure 1 correspond à un exemple selon lequel les véhicules circulent à droite, comme en France. L'invention ne se limite cependant pas à un tel exemple et s'étend à toutes les configurations de route, incluant celles où les véhicules circulent à gauche. Auquel cas les sièges conducteur 12 et passager 13 sont inversés.

Selon un exemple de réalisation particulier, d'autres sièges se situent sur d'autres rangées derrière le premier rang occupé par les sièges conducteur 12 et passager 13. Le véhicule 10 dispose par exemple de 1, 2 ou 3 rangs de sièges, chacun des sièges pouvant recevoir un occupant.

L'habitacle comprend par exemple une ceinture de sécurité (non illustrée) pour chaque siège, permettant ainsi à un occupant d'un siège de mettre sa ceinture de sécurité afin d'être protégé par cette dernière en cas de choc du véhicule 10.

Le véhicule 10 est ainsi configuré pour recevoir un ou plusieurs occupants, dont un conducteur par exemple.

L'habitacle du véhicule 10 comprend également un rétroviseur intérieur 11. Celui-ci est par exemple placé en hauteur, à quelques centimètres d'un ciel de toit ou d'une extrémité haute d'un pare-brise 14. Le rétroviseur est par exemple placé au milieu de l'habitacle, c'est-à-dire à mi-distance entre le siège conducteur 12 et le siège passager 13. Ainsi placé, le rétroviseur n'entrave pas la vue d'un conducteur du véhicule 10 placé dans le siège conducteur 13, le conducteur peut ainsi regarder l'environnement du véhicule à travers le pare-brise 14 sans gêne.

Le véhicule 10 comprend également un système 2 de surveillance d'occupant. Un tel système permet, comme exprimé en préambule, de déterminer par exemple la présence d'occupant(s) dans les différents sièges du véhicule 10 ou de surveiller le visage ou des attitudes du conducteur du véhicule 10 afin de déceler un état de fatigue et/ou de somnolence par exemple.

Le système 2 de surveillance d'occupant est positionné dans le rétroviseur intérieur 11 du véhicule 10. Ainsi positionné, il dispose d'une situation permettant de surveiller l'ensemble des occupants du véhicule 10, aucun obstacle n'étant placé entre le rétroviseur intérieur 11 et chaque occupant du véhicule 10.

Le système 2 de surveillance d'occupant d'un véhicule 10 comprend un ensemble de modules électroniques, ledit ensemble comprenant :
- un capteur de profondeur 20,
- une caméra 21 configurée pour capter des ondes visibles et infrarouges, et
- un émetteur 22 d'ondes infrarouges.

Le système 2 comprend également un unique circuit imprimé 23 configuré pour recevoir et connecter l'ensemble de modules.

Selon un exemple de réalisation particulier, l'ensemble des modules électroniques est orienté vers l'intérieur de l'habitacle du véhicule 10, permettant ainsi au capteur de profondeur 20 et à la caméra 21 de bénéficier d'un champ de vision intégrant une grande partie de l'habitacle, comprenant les sièges et d'éventuels occupants du véhicule 10. De manière similaire, l'émetteur 22 envoie ainsi les ondes infrarouges vers les zones comprises dans le champ de vision précédemment défini.

Un capteur de profondeur est par exemple de type « Temps de vol » (en anglais « Time of Flight » ou « ToF »), caméra stéréoscopique ou LIDAR (acronyme de l'anglais « light detection and ranging » ou « laser imaging detection and ranging », soit en français « détection et estimation de la distance par la lumière » ou « par laser »).

Selon un exemple de réalisation particulier, le capteur de profondeur 20 est du type capteur de temps de vol (ToF). Un tel capteur présente de nombreux avantages tels que :
- l'absence de pièces en mouvement, garantissant ainsi une bonne calibration du capteur et une absence d'usure,
- une très grande compacité, sa taille est de l'ordre de quelques mm³ voire dizaines de mm³,
- une portée permettant de couvrir la profondeur d'un habitacle, de l'ordre de quelques mètres,
- un temps de rafraîchissement permettant un traitement rapide voire en temps réel des données, de l'ordre de 60 images par seconde (60Hz).

Le capteur de profondeur 20 a une résolution par exemple de l'ordre de 300 000 pixels ou 500 000 pixels.

Le système 2 comprend également une caméra 21 configurée pour capter des ondes visibles et infrarouges. Cette caméra permet ainsi d'acquérir des images de l'habitacle et de ses occupants.

Cette caméra 21 permet d'obtenir des images, les données se présentant sous la forme de données représentant des pixels caractérisés par :
- des coordonnées dans chaque image ; et
- des données relatives aux couleurs et luminosité des objets de la scène observée, ici l'habitacle du véhicule 10 et ses occupants, sous forme par exemple de données colorimétriques RGB (de l'anglais « Red Green Blue », en français « Rouge Vert Bleu ») ou TSL (Ton, Saturation, Luminosité). La caméra a par exemple une résolution comprise entre 2 et 15 Méga Pixels (MPx).

Le système 2 comprend aussi un émetteur 22 d'ondes infrarouges, la longueur d'onde est par exemple de 870, 940 ou 950nm.

Les ondes émises par cet émetteur 22 sont alors captées par la caméra 21 et le capteur de profondeur 20 après réflexion sur un objet 100 présent dans l'habitacle. Un objet 100 est par exemple un siège 22, 23, une ceinture de sécurité, un occupant ou un tout autre objet présent dans le champ de vision de la caméra 21 ou du capteur de profondeur 20.

La durée Δt écoulée entre l'émission d'une onde infrarouge par l'émetteur 22 et la réception de cette onde par le capteur de profondeur 20 après réflexion sur un objet 100 permet de déterminer la profondeur ou distance d de l'objet 100 par rapport au capteur 20. Cette distance d est estimée à partir de cette durée Δt et en fonction de la célérité c de la lumière, ainsi d = c x Δt / 2.

Le système 2 positionné dans le rétroviseur intérieur 11 du véhicule 10 permet ainsi d'obtenir des données représentatives de l'habitacle du véhicule 10, de la présence et de la position de ses occupants ou encore des données représentatives d'expression sur un visage, par exemple celui du conducteur. Ces données sont présentées sous différentes formes :
- un nuage de points avec des coordonnées en trois dimensions acquis par le capteur de profondeur 20,
- une image RGB ou TSL acquise par la caméra 21,
- une image infrarouge acquise par la caméra 21 avec l'aide de l'émetteur infrarouge 22.

L'utilisation d'un unique circuit électronique 23 permet de mutualiser une partie de ses composants et permet un gain de place, donc une miniaturisation du système 2. Une miniaturisation du système 2 permet ainsi de l'intégrer dans un rétroviseur intérieur 11 du véhicule 10 sans avoir à augmenter considérablement son volume. Ainsi l'intégration du système 2 est plus aisée et plus discrète.

La figure 2 illustre schématiquement un rétroviseur intérieur embarqué dans le véhicule, par exemple le véhicule 10 de la figure 1 et comprenant un système 2 de surveillance d'occupant du véhicule, selon un exemple de réalisation particulier et non limitatif de la présente invention.

Le circuit électronique 23 reçoit et connecte un capteur de profondeur 20, une caméra 21 configurée pour capter des ondes visibles et infrarouges et un émetteur 22 d'ondes infrarouges tels que décrits dans la figure 1.

Selon un exemple de réalisation particulier, l'émetteur 22 comprend en outre un ensemble de diodes électroluminescentes (DEL) 22a émettant un rayonnement infrarouge. Cet ensemble de diodes électroluminescentes 22a est regroupé pour ne constituer qu'un seul module selon cet exemple. Selon d'autres exemples, les diodes électroluminescentes 22a sont réparties à plusieurs endroits sur le circuit électronique 23.

Selon une variante, le circuit électronique 23 comprend en outre un module de gestion de puissance 25 alimentant l'ensemble de modules électroniques. Ce module se compose par exemple de circuits de distribution d'alimentation et/ou de câbles, régulant une tension pour conserver une référence d'alimentation électrique stable des différents modules électroniques. Un tel module de gestion de puissance réalise par exemple une conversion d'une tension électrique reçue du système embarqué du véhicule 10, par exemple en 12 ou 24V, en une tension électrique adaptée aux modules électroniques, par exemple 2, 5 ou 6V. Il permet notamment, si besoin, de transformer une tension continue en une tension alternative ou pulsée.

Le système 2 comprend un (ou plusieurs) processeur(s) ou microcontrôleur(s) 26 configurés pour exécuter des instructions pour la réalisation des étapes du procédé et/ou pour l'exécution des instructions du ou des logiciels embarqués dans le système 2. Le microcontrôleur 26 peut inclure de la mémoire intégrée, une interface d'entrée/sortie, et différents circuits connus de l'homme du métier.

Le microcontrôleur 26 contrôle l'ensemble de modules électroniques, il assure par exemple :
- la synchronisation entre un envoi d'une onde infrarouge par l'émetteur 22 et sa réception par le capteur de profondeur 20, et/ou
- l'acquisition simultanée de données par la caméra 21 et le capteur de profondeur 20, et/ou
- la gestion de l'allumage de l'émetteur 22 en fonction des besoins de la caméra 21 et/ou du capteur de profondeur 20.

Ainsi, l'émetteur 22 est contrôlé par le capteur de profondeur 20 et par la caméra 21, notamment par l'intermédiaire du microcontrôleur 26.

Le système 2 comprend en outre au moins une mémoire 27 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 27.

Selon différents exemples de réalisation particuliers et non limitatifs, le système 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le système 2 comprend une puce 24 de transmission de données ou un bloc d'éléments d'interface pour communiquer avec divers systèmes embarqués du véhicule 10.

Selon un autre exemple de réalisation particulier et non limitatif, le système 2 comprend une puce 24 de transmission de données, par exemple reliée à une interface de communication qui permet d'établir une communication avec d'autres dispositifs (tels que d'autres calculateurs du système embarqué ou des capteurs embarqués) via un canal de communication. La puce 24 de transmission de données et/ou l'interface de communication correspond par exemple à un transmetteur configuré pour transmettre et recevoir des informations et/ou des données via le canal de communication. L'interface de communication correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458), Ethernet (standardisé par la norme ISO/IEC 802-3) ou LIN (de l'anglais « Local Interconnect Network », ou en français « Réseau interconnecté local »).

Selon un exemple de réalisation particulier et non limitatif, le système 2 peut fournir des signaux de sortie à un ou plusieurs dispositifs externes, tels qu'un écran d'affichage, tactile ou non, et/ou d'autres périphériques via des interfaces de sortie respectives. Selon une variante, l'un ou l'autre des dispositifs externes est intégré au système 2.

Les données acquises par le capteur de profondeur 20 et/ou par la caméra 21 alimentent par exemple un ou plusieurs systèmes d'aide à la conduite, dit ADAS (de l'anglais « Advanced Driver-Assistance System » ou en français « Système d'aide à la conduite avancé ») embarqués dans le véhicule 10.

Le système 2 dispose ainsi de nombreux éléments mutualisés et directement connectés entre eux par l'intermédiaire du circuit électronique 23. Le circuit électronique 23 permet ainsi de ne présenter qu'une seule interface pour connecter l'ensemble des modules électroniques au système embarqué du véhicule 10, permettant une installation plus aisée.

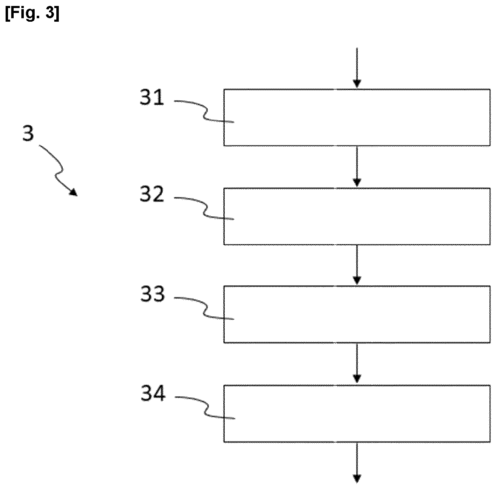

La figure 3 illustre un organigramme des différentes étapes d'un procédé 3 de surveillance d'occupant d'un véhicule, par exemple du véhicule 10, selon un exemple de réalisation particulier et non limitatif de la présente invention. Le procédé 3 est par exemple mis en œuvre par le système 2 embarqué dans le véhicule 10.

Dans une première étape 31, des ondes infrarouges sont émises par l'émetteur 22.

Dans une deuxième étape 32, des premières données représentatives d'une image acquise par la caméra 21 sont reçues.

Dans une troisième étape 33, des deuxièmes données représentatives d'une cartographie de profondeurs acquise par le capteur de profondeur 20 sont reçues.

Dans une quatrième étape 34, des valeurs de profondeurs de la cartographie sont associées à un ensemble de pixels de l'image.

Selon une variante, les variantes et exemples des opérations décrits en relation avec les figures 1 à 2 s'appliquent aux étapes du procédé 3 de la figure 3.

La présente invention concerne également un véhicule, par exemple automobile ou plus généralement un véhicule à moteur terrestre, comprenant le système 2 de la figure 1 ou 2.

## Revendications

1. Rétroviseur intérieur (11) comprenant un système (2) de surveillance d'occupant d'un véhicule (10), ledit système comprenant un ensemble de modules électroniques, ledit ensemble comprenant :
- un capteur de profondeur (20),
- une caméra (21) configurée pour capter des ondes visibles et infrarouges, et
- un émetteur (22) d'ondes infrarouges,
**caractérisé en ce que** ledit système (2) comprend un unique circuit imprimé (23) configuré pour recevoir et connecter ledit ensemble de modules électroniques, ledit système (2) étant positionné dans le rétroviseur intérieur (11) dudit véhicule (10).

2. Rétroviseur selon la revendication 1, pour lequel le capteur de profondeur (20) est du type capteur de temps de vol.

3. Rétroviseur selon la revendication 1 ou 2, pour lequel ledit émetteur (22) est contrôlé par ledit capteur de profondeur (20) et par ladite caméra (21).

4. Rétroviseur selon l'une des revendications 1 à 3, lequel comprend en outre une puce (24) configurée pour une transmission de données à destination d'un système embarqué dudit véhicule (10), ladite puce étant reliée en communication audit ensemble de modules électroniques pour recevoir lesdites données dudit ensemble de modules électroniques.

5. Rétroviseur selon l'une des revendications 1 à 4, pour lequel ledit émetteur 22 comprend en outre un ensemble de diodes électroluminescentes (22a) configurées pour émettre un rayonnement infrarouge.

6. Rétroviseur selon l'une des revendications 1 à 5, lequel comprend en outre un module de gestion de puissance (25) configuré pour alimenter ledit ensemble de modules électroniques.

7. Rétroviseur selon l'une des revendications 1 à 6, lequel comprend un microcontrôleur (26) configuré pour contrôler ledit ensemble de modules électroniques.

8. Rétroviseur selon l'une des revendications 1 à 7, pour lequel l'ensemble des modules électroniques est orienté vers l'intérieur d'un habitacle dudit véhicule (10).

9. Procédé (3) de surveillance d'occupant d'un véhicule mis en œuvre par un Rétroviseur selon l'une des revendications 1 à 8, ledit procédé comprenant les étapes de :
- émission (31) d'ondes infrarouges par ledit émetteur (22),
- réception (32) de premières données représentatives d'une image acquise par ladite caméra (21),
- réception (33) de deuxièmes données représentatives d'une cartographie de profondeurs acquise par ledit capteur de profondeur (20),
- association (34) de valeurs de profondeurs de ladite cartographie à un ensemble de pixels de ladite image.

10. Véhicule (10) comprenant le Rétroviseur selon l'une des revendications 1 à 8.

## Patentansprüche

1. Innenrückspiegel (11) mit einem System (2) zur Überwachung eines Fahrzeuginsassen (10), wobei das System einen Satz elektronischer Module umfasst, wobei der Satz umfasst:
- einen Tiefensensor (20),
- eine Kamera (21), die zum Erfassen von sichtbaren und Infrarotwellen konfiguriert ist, und
- einen Infrarotwellen-Sender (22),
**dadurch gekennzeichnet, dass** das System (2) eine einzelne gedruckte Schaltung (23) umfasst, die zum Empfangen und Verbinden des Satzes elektronischer Module konfiguriert ist, wobei das System (2) in einem Innenrückspiegel (11) des Fahrzeugs angeordnet ist (10)

2. System (2) nach Anspruch 1, wobei der Tiefensensor (20) vom Flugzeitsensor-Typ ist.

3. Rückblickspiegel nach Anspruch 1 oder 2, bei dem der Sender (22) durch den Tiefensensor (20) und die Kamera (21) gesteuert wird.

4. Rückblickspiegel nach einem der Ansprüche 1 bis 3, der ferner einen Chip (24) aufweist, der für eine Datenübertragung zu einem Bordsystem des Fahrzeugs (10) konfiguriert ist, wobei der Chip mit dem Satz elektronischer Module in Verbindung steht, um die Daten des Satzes elektronischer Module zu empfangen.

5. Rückblickspiegel nach einem der Ansprüche 1 bis 4, bei dem der Emitter 22 ferner eine Anordnung von Leuchtdioden (22a) aufweist, die so konfiguriert sind, dass sie Infrarotstrahlung emittieren.

6. Rückblickspiegel nach einem der Ansprüche 1 bis 5, der ferner ein Leistungsverwaltungsmodul (25) aufweist, das so konfiguriert ist, dass es den Satz von elektronischen Modulen mit Energie versorgt.

7. Rückblickspiegel nach einem der Ansprüche 1 bis 6, der einen Mikrocontroller (26) aufweist, der so konfiguriert ist, dass er den Satz elektronischer Module steuert.

8. Rückblickspiegel nach einem der Ansprüche 1 bis 7, bei dem die Gesamtheit der elektronischen Module in einen Fahrgastraum des Fahrzeugs (10) gerichtet ist.

9. Verfahren (3) zur Überwachung eines Fahrzeuginsassen, das durch einen Rückspiegel nach einem der Ansprüche 1 bis 8 durchgeführt wird, wobei das Verfahren die folgenden Schritte umfasst:
- Außenden (31) von Infrarotwellen durch den Sender (22),
- Empfangen (32) erster Daten, die ein durch die Kamera (21) aufgenommenes Bild darstellen,
- Empfangen (33) zweiter Daten, die eine durch den Tiefensensor (20) aufgenommene Tiefenabbildung darstellen,
- Zuordnen (34) von Tiefenwerten der Abbildung zu einem Satz von Pixeln der Abbildung Bild.

10. Fahrzeug (10) mit dem Rückspiegel nach einem der Ansprüche 1 bis 8.

## Claims

1. Interior rearview mirror (11) comprising a system (2) for monitoring an occupant of a vehicle (10), said system comprising a set of electronic units, said set comprising:
- a depth sensor (20),
- a camera (21) configured to pick up visible and infrared waves, and
- an infrared wave sender (22),
wherein said system (2) comprises a single printed circuit (23) configured to receive and connect said set of electronic units, said system (2) being positioned in an interior rear-view mirror (11) of said vehicle (10).

2. System (2) according to claim 1, for which the depth sensor (20) is of the flight time sensor type.

3. Rearview mirror according to claim 1 or 2, for which said sender (22) is on dock by said depth sensor (20) and by said camera (21).

4. Rearview mirror according to one of claims 1 to 3, which further comprises a chip (24) configured for a data transmission to an on-board system of said vehicle (10), said chip being connected in communication to said set of electronic modules to receive said data from said set of electronic modules.

5. Rearview mirror according to one of claims 1 to 4, for which said sender 22 further comprises a set of light-emitting diodes (22 a) configured to emit infrared radiation.

6. Rearview mirror according to one of claims 1 to 5, which further comprises a power management module (25) configured to power said set of electronic modules.

7. Mirror according to one of claims 1 to 6, which comprises a microcontroller (26) configured to control said set of electronic modules.

8. Mirror according to one of claims 1 to 7, for which the set of electronic modules is orientated towards the interior of a passenger compartment of said vehicle (10).

9. Method (3) for monitoring an occupant of a vehicle implemented by a rear-view mirror according to one of claims 1 to 8, said method comprising the steps of:
- emission (31) of infrared waves by said sender (22),
- receipt (32) of first data representative of an image acquired by said camera (21),
- receipt (33) of second data representative of a depth map acquired by said depth sensor (20),
- association (34) of depth values of said map with a set of pixels of said image.

10. Vehicle (10) comprising the rearview mirror according to one of claims 1 to 8.
